# EUROPEAN PATENT SPECIFICATION

(11) **EP 2 276 708 B1**
(45) Date of publication and mention of the grant of the patent: **31.08.2011**
(21) Application number: 09733036.9
(22) Date of filing: 09.01.2009
(51) Int. Cl.: C03B 40/027

(54) **METHOD AND DEVICE FOR MOULD LUBRICATION IN GLASS ARTICLE PRODUCTION MACHINES**
VERFAHREN UND VORRICHTUNG FÜR FORMSCHMIERUNG BEI MASCHINEN ZUR GLASARTIKELHERSTELLUNG
PROCÉDÉ ET DISPOSITIF POUR LA LUBRIFICATION DE MOULE DANS DES MACHINES DE FABRICATION D'ARTICLES EN VERRE

(30) Priority: 16.04.2008 IT VE20080032
(43) Date of publication of application: 26.01.2011
(73) Proprietor: Zignago Vetro S.P.A., 30025 Fossalta di Portogruaro (IT)
(72) Inventor: DRI, Ovidio, I-33078 Cordovado (IT); MORETTO, Roberto, I-30026 Portogruaro (IT); PETARRA, Fabrizio, I-33053 Latisana (IT)
(74) Representative: Piovesana, Paolo
(86) International application number: PCT/EP2009/050236
(87) International publication number: WO 2009/127447

(56) References cited:
- EP-A- 0 647 599
- US-A- 5 885 316
- US-A1- 2006 144 088

## Description

The present invention relates to a method and device for mould lubrication in glass article production machines.

In glass article production by automatic or semiautomatic machines a gob of molten glass is introduced into a mould at each working cycle, to undergo the necessary processing to adhere to the mould cavity and form a hollow glass article (for example a bottle) of shape corresponding to that of the mould.

This known method also comprises periodically lubricating the surface of the mould cavity, to facilitate glass detachment therefrom on termination of the forming process. In the past this was done only by a manual swabbing operation consisting of depositing a layer of grease containing graphite on the inner wall of the mould.

EP 0 647 599 A1 discloses an automatic blank mold sooting device using a piezoelectric sparking means to ignite the acetylene gas.

To eliminate this swabbing operation a method was later proposed consisting of burning an acetylene stream inside the mould under reducing conditions, which by cracking deposits a graphite layer (carbon black) on the mould surface.

According to this known method the acetylene is ignited by an oxygen-methane pilot flame generated by a combined burner, i.e. fed with oxygen, methane and acetylene.

A drawback of this known solution is the high energy consumption, due to the need to always maintain the pilot flame lit.

Another drawback is the inevitable heating caused by the always active pilot flame on the machine equipment.

Another drawback is the costly burner maintenance due to the presence of the carbon black.

Another drawback is the risk of extinguishing the pilot flame and the consequent need for its re-ignition, with interruption of the machine operating cycle.

Another drawback, related to the accidental extinguishing of the pilot flame, is the risk of acetylene detonation when the gob of glass is about to enter the mould already containing unburnt acetylene.

EP 647599 B1 suggests eliminating this problem by using a voltaic arc, a piezoelectric spark or an electric resistance element instead of a pilot flame, to ignite the acetylene.

This solution has proved advantageous in that nearly all the drawbacks of the prior art were related to the presence of the now eliminated pilot flame, however other drawbacks arose.

One of these drawbacks is that the flame ignition electrodes are struck by the acetylene stream, with the resultant carbon black deposit preventing correct spark generation and hence correct flame ignition. Hence the risk of acetylene detonation is not eliminated unless the plant is frequently halted (on average 3-4 times every eight hours) for electrode cleaning.

Another drawback is the fact that in addition to the acetylene, other substances (oil, water dust), inevitably present in the operating environment, can form deposits on the electrodes, thus increasing the aforesaid drawback.

Another drawback is the fact that the spark generation requires the use of high operating voltages (more than 12 kV), with consequent safety problems.

All these drawbacks are eliminated according to the invention by a method for mould lubrication in glass article production machines, as described in claim 1.

According to the invention the method uses an ignition device as described in claim 5.

A preferred embodiment of the present invention is further described with reference to the accompanying drawings, in which:
- Figure 1: shows a device of the invention with a two-nozzle lubrication head for a mould of an automatic glass article production machine,

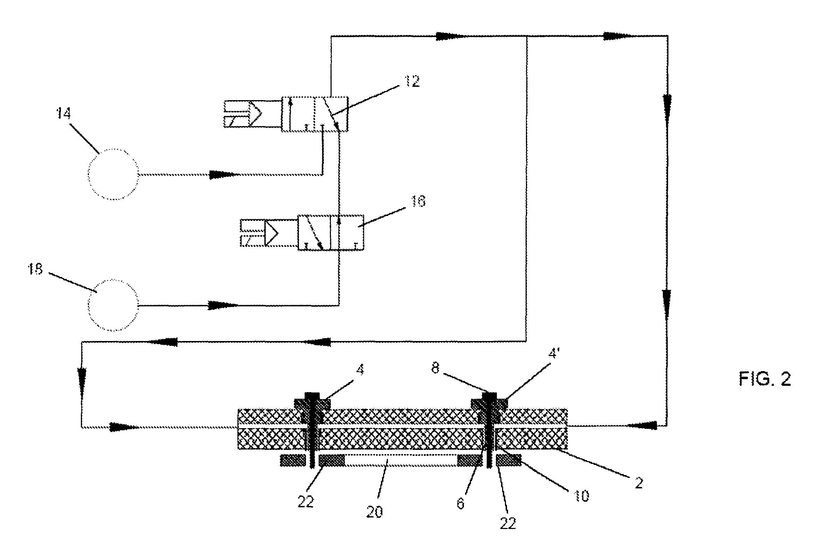

- Figure 2: shows schematically the system for automatically feeding the flow of acetylene and cooling air to the nozzles of said head.

As can be seen from the drawings, the device of the invention is shown with a two-nozzle lubrication head. However the invention is also applicable to lubrication heads with a different number of nozzles.

In this case the two nozzles face two separate machine moulds, which are not shown as they can be of traditional type and do not form an aspect of the invention.

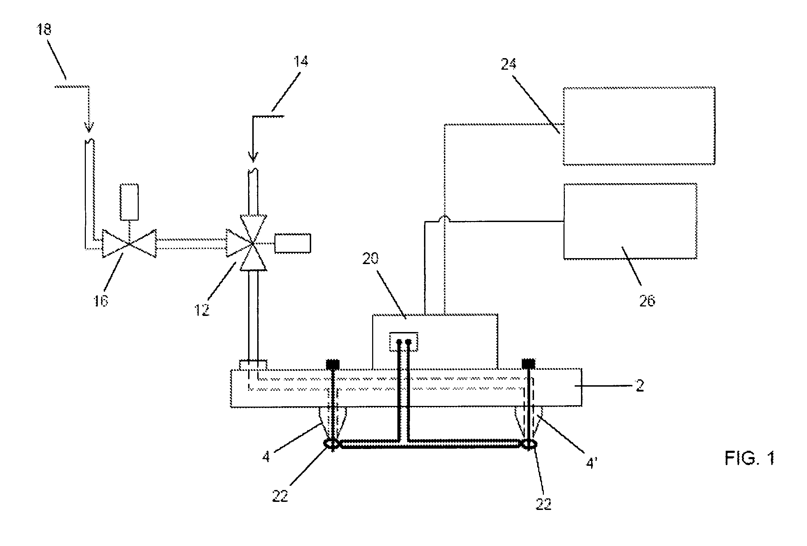

Figure 1 shows the basic scheme of the device comprising two injection nozzles. It comprises a support 2 secured to the machine structure and carrying two applied nozzles 4 comprising an axial cavity 6 housing an igniter 8 of ferromagnetic or paramagnetic material extending within the corresponding nozzle 4 and emerging from it with its end facing the machine mould.

Preferably the igniter 8 consists of ferromagnetic material about which a spiral of paramagnetic material in the form of a noble metal, for example a platinum alloy, is wound. In this manner, as clarified hereinafter, the ferromagnetic material enables the igniter 8 to be heated by induction even with low power available, and the platinum alloy, because of the small diameter of the wire forming the spiral, ensures incandescence and hence ignition of the gas, while avoiding oxidation phenomena and hence degradation with time.

In addition to the axial cavity 6, each nozzle 4 also comprises a cylindrical cavity 10, coaxial with the igniter 8 and communicating with the cylindrical cavity of the other element and with a first distributer 12.

This itself is connected directly to a source 14 of any fuel gas, for example acetylene and, via a second distributer 16, to a compressed air source 18.

With the support 2 a heating inductor 20 is associated comprising a pair of coil turns 22 connected in series, they surrounding the ends of the two igniters 8 emerging from the respective nozzles 4.

The inductor is connected to a high frequency generator, of the order of 800-1200 kHz.

The two coil turns and their connection are associated with a longitudinal cavity allowing circulation of a cooling fluid (water) originating from a cooler 26.

The assembly is controlled by a control unit (not shown) ensuring the correct operative cycle in synchronism with the machine operating steps.

The device of the invention operates in the following manner.

In accordance with the predetermined machine operative cycle the distributer 12 is caused to connect the acetylene source 4 to the cavity 10 of the two nozzles 4, such that these feed corresponding acetylene flows into the corresponding mould cavities.

During this stage the generator 24 is made to generate a high frequency current pulse which circulates through the coil turns 22 and by electromagnetic induction heats the two igniters 8. These bring the respective platinum alloy spirals to an incandescent state, to ignite the acetylene flows fed into the mould cavities.

On termination of acetylene inflow, a command to the two distributers 12 and 16 interrupts their connection to the acetylene source 14 and connects them to the compressed air source 18. In this manner the air flows leaving the nozzles 4 maintain the nozzles clean and extinguish the flames if still present.

From the aforegoing it is apparent that the device of the invention and the method which uses it are extremely advantageous, and in particular:
- they enable limited electrical power, of the order of 1 kW at low voltage, to be used for a limited time, and hence virtually without safety problems,
- they make the machine operation insensitive to any carbon black deposit on the acetylene flow ignition member,
- they always maintain this member perfectly clean by virtue of the air flow,
- they allow simple igniter temperature control based on the type of fuel gas used and its velocity and flow rate,
- they eliminate any risk of fuel gas detonation,
- they ensure flame extinction on termination of the lubrication cycle.

## Claims

1. A method for mould lubrication in glass article production machines, by which an ignited fuel gas flow is introduced into a mould, **characterised by** igniting the gas flow by causing it to strike an ignition device (8) heated by electromagnetic induction to a temperature greater than the ignition temperature of said gas.

2. A method as claimed in claim 1, **characterised by** using acetylene as the fuel gas.

3. A method as claimed in claim 1, **characterised by** following the fuel gas flow with an air flow for cleaning said igniter and for extinguishing the previously generated flame.

4. A method as claimed in claim 1, **characterised in that** during the heating of said ignition device by electromagnetic induction, the means heating said ignition device by electromagnetic induction are cooled.

5. A device for mould lubrication in glass article production machines, to be applied to a nozzle for introducing a fuel gas flow into a mould of said machine, **characterised by** comprising an ignition device (8) with which means (22) are associated for its heating by electromagnetic induction.

6. A device as claimed in claim 5, **characterised in that** the igniter (8) consists of a rod of ferromagnetic material supported in a substantially axial position by a nozzle (4) fed with said fuel gas.

7. A device as claimed in claim 6, **characterised in that** one end of the rod of said ignition device (8) emerges from said nozzle (4).

8. A device as claimed in claim 6, **characterised in that** a spiral of noble metal is wound about the rod of said ignition device (8).

9. A device as claimed in claim 8, **characterised in that** said spiral is made of platinum alloy.

10. A device as claimed in claim 5, **characterised in that** the rod of said igniter (8) is surrounded by at least one coil turn (22) of a circuit connected to a generator (24) of high frequency electrical energy.

11. A device as claimed in claim 10, **characterised in that** said electrical energy generator operates at a frequency between 800 and 1200 kHz.

12. A device as claimed in claim 10, **characterised in that** said turn (22) is associated longitudinally with a cavity for circulating a cooling liquid flow.

13. A device as claimed in claim 5, **characterised in that** means for introducing a compressed air flow are associated with said nozzle (4) for introducing the fuel gas flow.

14. A device as claimed in claim 13, **characterised in that** each nozzle (4) comprises a cylindrical cavity (10) surrounding the rod of said igniter (8) and connected, via valve means (12, 16), to a source (14) of said fuel gas and to a source (18) of compressed air.

## Patentansprüche

1. Verfahren zur Formschmierung in Glasartikelherstellungsmaschinen, bei welchem ein gezündeter Brennstoffgasstrom in eine Form eingeführt wird, **gekennzeichnet durch** Zündung des Gasstroms, indem er veranlasst wird auf eine Zündvorrichtung (8) aufzutreffen, welche **durch** elektromagnetische Induktion auf eine Temperatur größer als die Zündtemperatur des Gases erhitzt wird.

2. Verfahren nach Anspruch 1, **gekennzeichnet durch** die Verwendung von Acetylen als das Brennstoffgas.

3. Verfahren nach Anspruch 1, **gekennzeichnet durch** das Nachfolgen des Brennstoffgasstroms mit einem Luftstrom zum Reinigen der Zündvorrichtung und zum Löschen der zuvor erzeugten Flamme.

4. Verfahren nach Anspruch 1, **dadurch gekennzeichnet, dass** während des Erhitzens der Zündvorrichtung durch elektromagnetische Induktion die Mittel, welche die Zündvorrichtung durch elektromagnetische Induktion erhitzen, gekühlt werden.

5. Vorrichtung zur Formschmierung in Glasartikelproduktionsmaschinen, welche an einer Düse zum Einführen eines Brennstoffgasstroms in eine Form dieser Maschine zum Einsatz kommt, **gekennzeichnet durch** das Umfassen einer Zündvorrichtung (8), mit welcher Mittel (22) verbunden sind, um diese durch elektromagnetische Induktion zu erhitzen.

6. Vorrichtung nach Anspruch 5, **dadurch gekennzeichnet, dass** die Zündvorrichtung (8) aus einem Stab aus ferromagnetischem Material besteht, welcher in einer im Wesentlichen axialen Position durch eine Düse (4) abgestützt ist, welche mit dem Brennstoffgas gespeist wird.

7. Vorrichtung nach Anspruch 6, **dadurch gekennzeichnet, dass** ein Ende des Stabes der Zündvorrichtung (8) aus der Düse (4) herausragt.

8. Vorrichtung nach Anspruch 6, **dadurch gekennzeichnet, dass** eine Spirale aus Edelmetall um den Stab der Zündvorrichtung (8) gewunden ist.

9. Vorrichtung nach Anspruch 8, **dadurch gekennzeichnet, dass** die Spirale aus einer Platinlegierung hergestellt ist.

10. Vorrichtung nach Anspruch 5, **dadurch gekennzeichnet, dass** der Stab der Zündvorrichtung (8) mindestens von einer Windung (22) eines Stromkreislaufs umgeben ist, welcher mit einem Generator (24) elektrischer Hochfrequenzenergie verbunden ist.

11. Vorrichtung nach Anspruch 10, **dadurch gekennzeichnet, dass** der elektrische Energiegenerator bei einer Frequenz zwischen 800 und 1200 kHz betrieben ist.

12. Vorrichtung nach Anspruch 10, **dadurch gekennzeichnet, dass** die Windung (22) der Länge nach mit einer Aussparung zum Zirkulieren eines Kühlflüssigkeitsstroms verbunden ist.

13. Vorrichtung nach Anspruch 5, **dadurch gekennzeichnet, dass** Mittel zum Einführen eines Druckluftstroms mit der Düse (4) zum Einführen des Brennstoffgasstroms verbunden sind.

14. Vorrichtung nach Anspruch 13, **dadurch gekennzeichnet, dass** jede Düse (4) eine zylindrische Aussparung (10) umfasst, welche den Stab der Zündvorrichtung (8) umgibt und über Ventile (12, 16) mit einer Quelle (14) des Brennstoffgases und einer Quelle (18) der Druckluft verbunden ist.

## Revendications

1. Procédé de lubrification de moules dans des machines de production d'articles en verre, dans lequel un flux de gaz combustible enflammé est introduit dans un moule, **caractérisé par** l'inflammation du flux de gaz en l'amenant à heurter un dispositif d'allumage (8) chauffé par induction électromagnétique à une température supérieure à la température d'allumage dudit gaz.

2. Procédé selon la revendication 1, **caractérisé en ce que** l'on utilise de l'acétylène comme gaz combustible.

3. Procédé selon la revendication 1, **caractérisé en ce que** l'on fait suivre le flux de gaz combustible par un flux d'air pour nettoyer ledit dispositif d'allumage et éteindre la flamme précédemment générée.

4. Procédé selon la revendication 1, **caractérisé en ce que**, pendant le chauffage dudit dispositif d'allumage par induction électromagnétique, les moyens chauffant ledit dispositif d'allumage par induction électromagnétique sont refroidis.

5. Dispositif de lubrification de moules dans des machines de production d'articles en verre, pour appliquer à une buse afin d'introduire un flux de gaz combustible dans un moule de ladite machine, **caractérisé en ce qu'**il comprend un dispositif d'allumage (8) auquel des moyens (22) sont associés pour le chauffer par induction électromagnétique.

6. Dispositif selon la revendication 5, **caractérisé en ce que** le dispositif d'allumage (8) est constitué d'une tige de matériau ferromagnétique supportée dans une position sensiblement axiale par une buse (4) alimentée en dit gaz combustible.

7. Dispositif selon la revendication 6, **caractérisé en ce qu'**une extrémité de la tige dudit dispositif d'allumage (8) émerge de ladite buse (4).

8. Dispositif selon la revendication 6, **caractérisé en ce qu'**une spirale de métal noble est enroulée sur la tige dudit dispositif d'allumage (8).

9. Dispositif selon la revendication 8, **caractérisé en ce que** ladite spirale est fabriquée en alliage de platine.

10. Dispositif selon la revendication 5, **caractérisé en ce que** la tige dudit dispositif d'allumage (8) est entourée d'au moins une spire de bobine (22) d'un circuit raccordé à un générateur (24) d'énergie électrique de haute fréquence.

11. Dispositif selon la revendication 10, **caractérisé en ce que** ledit générateur d'énergie électrique fonctionne à une fréquence de 800 à 1200 kHz.

12. Dispositif selon la revendication 10, **caractérisé en ce que** ladite spire (22) est associée longitudinalement à une cavité pour faire circuler un flux de liquide de refroidissement.

13. Dispositif selon la revendication 5, **caractérisé en ce que** les moyens pour introduire un flux d'air comprimé sont associés à ladite buse (4) pour introduire le flux de gaz combustible.

14. Dispositif selon la revendication 13, **caractérisé en ce que** chaque buse (4) comprend une cavité cylindrique (10) entourant la tige dudit dispositif d'allumage (8) et raccordée, via des moyens à soupape (12, 16), à une source (14) dudit gaz combustible et à une source (18) d'air comprimé.
